# EUROPÄISCHE PATENTANMELDUNG

(11) **EP 4 311 945 A1**
(43) Veröffentlichungstag der Anmeldung: **31.01.2024**
(21) Anmeldenummer: 22187446.4
(22) Anmeldetag: 28.07.2022
(51) Int. Cl.: F15B 13/08, B66C 13/20, B66C 23/88

(54) **NOTBETRIEBS-VENTILBLOCK FÜR EINEN MOBILKRAN**

(71) Anmelder: Manitowoc Crane Group France SAS, 69574 Dardilly Cedex (FR)
(72) Erfinder: SCHÜRMANN, Johannes, 26441 Jever (DE); SCHMITHÜSEN, Thomas, 26419 Schortens (DE); BOHMANN, Verena, 26203 Wardenburg (DE); WIESNER, Harald, 26434 Wangerland (DE)
(74) Vertreter: SSM Sandmair

(57) **Zusammenfassung**

Die Erfindung betrifft einen Notbetriebs-Ventilblock (1) mit einem Antriebs-Anschluss (2) zur hydraulischen Verbindung des Ventilblocks (1) mit einer Notantriebseinrichtung eines Mobilkrans, zumindest zwei Triebwerks-Anschlüssen (3A, 3B, 3C) zur hydraulischen Verbindung des Ventilblocks (1) mit je einem Triebwerk des Mobilkrans, zumindest zwei Sperrventilen (4A, 4B, 4C), welche jeweils einem der Triebwerks-Anschlüsse (3A, 3B, 3C) zugeordnet und dazu ausgestaltet sind, eine hydraulische Verbindung zwischen dem Antriebs-Anschluss (2) und dem ihnen jeweils zugeordneten Triebwerks-Anschluss (3A, 3B, 3C) wahlweise freizugeben oder zu sperren, und einem Betätigungsventil (5), welches dazu ausgestaltet ist, die hydraulische Verbindung zwischen einer Druckseite (2A) und einer Rücklaufseite (2B) des Antriebs-Anschlusses (2) mit entsprechenden Seiten der Triebwerks-Anschlüsse (3A, 3B, 3C) wahlweise umzukehren. Die Erfindung betrifft ferner einen Mobilkran mit einem solchen Notbetriebs-Ventilblock.

## Beschreibung

Die vorliegende Erfindung betrifft einen Ventilblock, mittels welchem bei einem Ausfall der Hauptenergieversorgung der Krantriebwerke sichergestellt werden kann, dass die Krantriebwerke über eine unabhängige Notenergieversorgung mit Hydraulikflüssigkeit versorgt werden können. Die vorliegende Erfindung betrifft ferner einen Mobilkran mit einem solchen Ventilblock, mit dem die Versorgung der Krantriebwerke mittels einer Notenergieversorgung erfolgen kann.

Kranfunktionen wie beispielsweise das Heben oder Senken einer Last am Hubseil, das Ein- oder Auswippen des Kranauslegers wie auch das Drehen des Kranoberwagens gegenüber dem Kranunterwagen werden bei Mobilkranen regelmäßig von hydraulischen Aggregaten wie etwa Hydraulikmotoren oder -zylindern durchgeführt. Diese werden wiederum von Hydraulikpumpen angetrieben, mit welchen sie über Hydraulikleitungen verbunden sind, um mit einen Volumenstrom an Hydraulikflüssigkeit versorgt zu werden. Um bei einem Schadensfall wesentliche Kranfunktionen weiterhin durchführen zu können, ist es wünschenswert und teilweise sogar gesetzlich vorgeschrieben, ein vom Hauptantriebssystem unabhängiges Antriebssystem vorzusehen.

Sogenannte "Transformatoren" stellen ein Beispiel für eine solche unabhängige Energieversorgung dar und bestehen im Wesentlichen aus einer Zahnradmotor-Pumpenkombination, die von einer externen hydraulischen Energiequelle angetrieben werden kann und Antriebsleistung an eine hydraulische Zahnradpumpe abgibt. Die externe hydraulische Energiequelle kann beispielsweise von einem weiteren Kran oder aber auch einem Hydraulikaggregat, einem sogenannten "Powerpack" bereitgestellt werden. Die Zahnradpumpe kann beispielsweise Hydraulikflüssigkeit aus dem Oberwagentank des Empfängerkrans entnehmen und stellt den hydraulischen Druck und Volumenstrom für die zu versorgenden Triebwerke bereit. Da hierbei nicht auf das hydraulische Hauptantriebssystem zurückgegriffen wird, werden die Triebwerke mit verminderter Leistung angetrieben. Bisherige Notantriebssysteme weisen hierbei eine Vielzahl von Ventilen auf, die in einer exakt vorgegebenen Weise manuell betätigt werden müssen, um ein gewünschtes Triebwerk in gewünschter Weise anzusteuern. Ferner wurden diese Systeme bislang individuell an einen Kran angepasst und sind daher aus einer Vielzahl von Hydraulikkomponenten aufgebaut, die für den Bediener oftmals in unübersichtlicher Weise verrohrt sind. Sie weisen daher regelmäßig eine unbefriedigende Lekageneigung auf und beanspruchen einen nicht zu vernachlässigenden Bauraum, wobei deren Unübersichtlichkeit oftmals zu Fehlbedienungen führt.

Es ist die Aufgabe der vorliegenden Erfindung, hier Abhilfe zu schaffen und eine kompakte, wartungsarme wie auch für einen Bediener leicht verständliche Vorrichtung bereitzustellen, mittels welcher einzelne Krantriebwerke hydraulisch mit einer Notantriebseinrichtung verbunden werden und von dieser angetrieben werden können.

Diese Aufgabe wird durch einen Ventilblock gemäß der vorliegenden Erfindung gelöst, welcher folgende Komponenten aufweist:
- einen Antriebs-Anschluss zur hydraulischen Verbindung des Ventilblocks mit einer Notantriebseinrichtung eines Mobilkrans;
- zumindest zwei Triebwerks-Anschlüsse zur hydraulischen Verbindung des Ventilblocks mit je einem Triebwerk des Mobilkrans;
- zumindest zwei Sperrventile, welche jeweils einem der Triebwerks-Anschlüsse zugeordnet und dazu ausgestaltet sind, eine hydraulische Verbindung zwischen dem Antriebs-Anschluss und dem ihnen jeweils zugeordneten Triebwerks-Anschluss wahlweise freizugeben oder zu sperren, und
- ein Betätigungsventil, welches dazu ausgestaltet ist, die hydraulische Verbindung zwischen einer Druckseite und einer Rücklaufseite des Antriebs-Anschlusses mit entsprechenden Seiten der Triebwerks-Anschlüsse wahlweise umzukehren.

Erfindungsgemäß werden die einzelnen Ventile in einer kompakten Einheit zusammengefasst. Eine Verrohrung oder gar Verschlauchung der einzelnen Ventile untereinander, wie dies bei entsprechenden Vorrichtungen aus dem Stand der Technik der Fall ist, kann somit entfallen. Vielmehr erfolgt die hydraulische Verbindung zwischen den einzelnen Ventilen und auch weiteren hydraulischen Komponenten durch im Ventilblockkörper ausgebildete Kanäle, sodass gegenüber bekannten Systemen mit untereinander verrohrten oder verschlauchten Ventilen nicht nur der Wartungsaufwand in erheblichem Maße reduziert werden kann, sondern auch das vom Ventilsystem eingenommene Bauvolumen.

Der die einzelnen Ventile aufnehmende Ventilblock muss hierbei nicht zwingend als einteiliger Körper ausgeführt sein, sondern kann vielmehr auch modular aufgebaut sein und mehrere hydraulisch miteinander in Verbindung stehende Modulkörper aufweisen. So ist es beispielsweise möglich, den erfindungsgemäßen Ventilblock zu modifizieren, um diesen an verschiedene Einbausituationen anzupassen, etwa für unterschiedlichen Krantypen, deren Krantriebwerke sich nach Art und Anzahl voneinander unterscheiden können. Ferner ist es dadurch möglich, einzelne hydraulische Komponenten nicht nur zu Wartungs- oder Reparaturzwecken vom übrigen Ventilblock zu lösen, sondern diese auch durch neue Komponenten zu ersetzen.

Gemäß einer Ausführungsform weist der Ventilblock für zumindest zwei der folgenden Krantriebwerke je einen Triebwerks-Anschluss auf:
- Drehwerk zum Drehen des Kran-Oberwagens gegenüber dem Kran-Unterwagen;
- Wippwerk zum Einwippen und Auswippen des Kranauslegers;
- Hubwerk zum Heben und Senken der an einem Hubseil angehängten Last.

Selbstverständlich kann der erfindungsgemäße Ventilblock für beliebige Krantriebwerke einen Triebwerks-Anschluss bereitstellen, um diese mit einer Notantriebseinrichtung zu verbinden.

Gemäß einer weiteren Ausführungsform sind die Sperrventile und/oder das Betätigungsventil ausgestaltet, mittels eines Handhebels betätigt zu werden, wobei die Betätigung der Sperrventile insbesondere so ausgestaltet ist, dass eine gleichzeitige Öffnung von mehreren Sperrventilen verhindert wird.

So ist es möglich, dass jedes der Ventile einen eigenen Handhebel aufweist, über welchen Bedienpersonal das Ventil in eine gewünschte Stellung bringen kann. Um Fehlbedienungen zu vermeiden, können die Hebel dabei so ausgestaltet sein, dass ein Hebel die jeweils anderen Hebel physisch blockiert, sobald er vom Bedienpersonal in eine Stellung gebracht wird, in welcher das dazugehörige Ventil geöffnet ist, also das entsprechende Krantriebwerk mit der Notantriebseinrichtung verbindet.

So kann sichergestellt werden, dass eine hydraulische Verbindung der Notantriebseinrichtung mit jeweils immer nur einem Krantriebwerk besteht und es folglich zu keinen unkontrollierten Stellbewegungen weiterer Krantriebwerke kommt.

Weiterhin ist es möglich, für die Sperrventile einen gemeinsamen Handhebel bereitzustellen, wobei jedes der Sperrventile einen Werkzeugangriff aufweist, mit welchem der Handhebel lösbar gekoppelt werden kann. Auch auf diese Weise kann vermieden werden, dass mehrere Ventile gleichzeitig geöffnet werden und so einen hydraulische Verbindung zwischen mehreren Krantriebwerken mit der Notantriebseinrichtung besteht. Bevor der Hebel mit einem zu öffnenden Ventil verbunden wird, muss dieser erst vom zuvor betätigten Ventil abgenommen werden, was für Bedienpersonal einen weiteren Hinweis schafft, das zuvor betätigte Ventil erst zu schließen. Als weitere Maßnahme wäre es möglich, die Kopplung zwischen dem gemeinsam bereitgestellten Handhebel und den einzelnen Ventilen so auszugestalten, dass der Handhebel nur in einer Schließstellung der Ventile von diesen abgenommen werden kann.

Die Bedienung des Ventilblocks kann weiterhin dadurch vereinfacht werden, indem der Handhebel oder die Werkzeugangriffe der Sperrventile in identischer Weise am Ventilblock angeordnet und/oder ausgerichtet sind, insbesondere in aneinander angrenzender Weise. Durch diese Maßnahme sind sämtliche zur Verfügung stehenden Ventile bzw. deren Betätigungshebel für Bedienpersonal gleichzeitig erkennbar. Bei gleichartig angeordneten Ventilen ist zugleich auch die jeweilige Betätigungsstellung sämtlicher Ventile erkennbar. Beispielsweise können die Ventile so angeordnet sein, dass eine bestimmte Raumrichtung des Handhebels bzw. des Werkzeugangriffs für sämtliche Ventile die gleiche Betätigungsstellung angibt, beispielsweise "offen" bzw. "geschlossen"

Ferner ist es möglich, dass der Handheben oder die Werkzeugangriffe der Sperrventile in ihrer Stellung mechanisch festlegbar ist/sind, insbesondere in ihrer die hydraulische Verbindung zwischen dem Antriebs-Anschluss und dem ihnen jeweils zugeordneten Triebwerks-Anschluss sperrenden Position. Hierdurch wird ein unkontrolliertes Öffnen einzelner Ventile verhindert.

Um die Betätigungsstellung der Ventile in einfacher Weise ersichtlich zu machen, können die Sperrventile, insbesondere deren Werkzeugangriffe oder deren Handhebel eine Stellungsanzeige aufweisen, im Speziellen in Form einer Vertiefung oder eines Vorsprungs am Werkzeugangriff oder Handhebel. Insbesondere wenn sämtliche Ventile in gleichartiger Weise angeordnet und/oder ausgerichtet sind, ist die Stellung sämtlicher Ventile sofort ersichtlich.

Zum Öffnen bzw. Sperren der hydraulischen Verbindung zwischen dem Antriebs-Anschluss und den jeweiligen Triebwerks-Anschlüssen ist jede geeignete Ausgestaltung der Ventile vorstellbar. Im Rahmen der vorliegenden Erfindung stellen Drehschieberventile eine bevorzugte, weil kompakt bauende Ausführung eines Sperrventils dar. Ferner können diese Sperrventile als 6/2-Wegeventile ausgebildet sein, mit welchen jeweils 6 hydraulische Anschlüsse in 2 verschiedenen Ventilstelllungen verschaltet sein können. Auch für das Betätigungsventil sind grundsätzliche alle geeigneten Ausführungsformen vorstellbar, allerdings wird auch hier die Ausführung als Drehschieberventil aufgrund seiner Kompaktheit bevorzugt. Ferner kann das Betätigungsventil als 5/3-Wegeventil ausgebildet sein, welches 5 hydraulische Anschlüsse in 3 verschiedenen Stellungen miteinander verschaltet.

Die jeweils einem der Triebwerks-Anschlüsse zugeordneten Sperrventile dienen ihrer Funktion nach dazu, eine hydraulische Verbindung zwischen dem Antriebs-Anschluss und dem jeweiligen Triebwerks-Anschluss freizugeben bzw. zu sperren. Mittels der Sperrventile kann so eine "Vorauswahl" eines mit der Notantriebseinrichtung anzutreibenden Krantriebwerks erfolgen. Dem Betätigungsventil kann hierbei nicht nur die Aufgabe zukommen, die Bewegungs- oder Drehrichtung des jeweils anzutreibenden Krantriebwerks zu definieren, sondern auch eine zusätzliche Sperrmöglichkeit der hydraulischen Verbindung zwischen dem Antriebs-Anschluss und den jeweiligen Triebwerksanschlüssen bereitzustellen. Sobald also mittels der Sperrventile eine Auswahl des anzutreibenden Kranztriebwerks getroffen wurde, kann durch Öffnen des Betätigungsventils in einer der gewünschten Bewegungsrichtung des Krantriebwerks entsprechenden Richtung die hydraulische Verbindung letztendlich freigegeben werden, um das entsprechende Krantriebwerk sogleich über die Notantriebseinrichtung anzutreiben. Die Bewegungsrichtung des Krantriebwerks hängt davon ab, welche der hydraulischen Zuleitungen des Triebwerks über das Betätigungsventil mit einer Druckseite bzw. einer Rücklaufseite des Antriebs-Anschlusses verbunden wird. Um sich die Funktion des Betätigungsventils für sämtliche Triebwerks-Anschlüsse nutzbar zu machen, kann das Betätigungsventil in der hydraulischen Verbindung des Antriebs-Anschlusses mit den Triebwerks-Anschlüssen zwischen dem Antriebs-Anschluss und den Sperrventilen angeordnet sein. Alternativ kann auch für jeden Triebwerks-Anschluss ein eigenes Betätigungsventil vorgesehen sein, welche zwischen den entsprechenden Sperrventilen und den ihnen zugeordneten Antriebs-Anschlüssen angeordnet sind.

In weiteren Ausführungsformen kann das Betätigungsventil ausgestaltet sein,
- in einer Grundstellung zumindest eines der Sperrventile mit einem Speisedruck zu versorgen, und insbesondere einen Umlauf von Hydraulikflüssigkeit von der Druckseite zur Rücklaufseite des Antriebs-Anschlusses zu ermöglichen;
- in einer Öffnungsstellung die Sperrventile mit einem Arbeitsdruck zu versorgen;
- in einer insbesondere zwischen der Grundstellung und einer der Öffnungsstellungen befindlichen Zwischenstellung zumindest eines der Sperrventile mit einem Speisedruck zu versorgen, und insbesondere einen Umlauf der Hydraulikflüssigkeit von der Druckseite zur Rücklaufseite des Antriebs-Anschlusses zu verhindern.

Ferner kann das Betätigungsventil so ausgestaltet sein, dass es in einer Grundstellung zumindest eines der Sperrventile nicht mit einem Speisedruck versorgt.

Für einzelne Kranfunktionen kann der Ventilblock ferner ein oder mehrere Senkbremsventile aufweisen, welche eine durch Schwerkraft bedingte Rückstellbewegung von Krantriebwerken verhindern. So kann der Ventilblock zumindest ein Senkbremsventil aufweisen, welches dazu ausgestaltet ist, eine hydraulische Verbindung zwischen den Rücklaufseiten eines entsprechenden Triebwerks-Anschlusses und des Antriebs-Anschlusses wahlweise freizugeben oder zu sperren. Das Betätigungsventil kann das oder die Senkbremsventile ferner mit Arbeitsdruck versorgen.

Zum Auffangen möglicher Leckage aus Ventilen, welche als Drehschieberventile ausgestaltet sein können, weist eine Aufführungsform des Ventilblocks zumindest eine hydraulische Verbindung auf, welche der Rückführung von aus zumindest einem der Sperrventile und/oder aus dem Betätigungsventil als Leckage austretender Hydraulikflüssigkeit zum Antriebs-Anschluss dient.

Ein weiterer Aspekt der vorliegenden Erfindung betrifft einen Mobilkran mit einer Notantriebseinrichtung, zumindest zwei, insbesondere dem Oberwagen zugeordneten Krantriebwerken und einem Notbetriebs-Ventilblock in einer der oben beschriebenen Ausführungsformen.

Bevorzugte Ausführungsformen der vorliegenden Erfindung werden im Folgenden unter Bezugnahme auf die beiliegenden Figuren näher erläutert. Die vorliegende Erfindung kann sämtliche hierin beschriebenen Merkmale einzeln sowie in jedweder sinnvollen Kombination umfassen. Es zeigen:
- Figur 1:: eine perspektivische Ansicht eines erfindungsgemäßen Notbetriebs-Ventilblocks;
- Figur 2:: ein hydraulischer Schaltplan des Ventilblocks aus Figur 1.

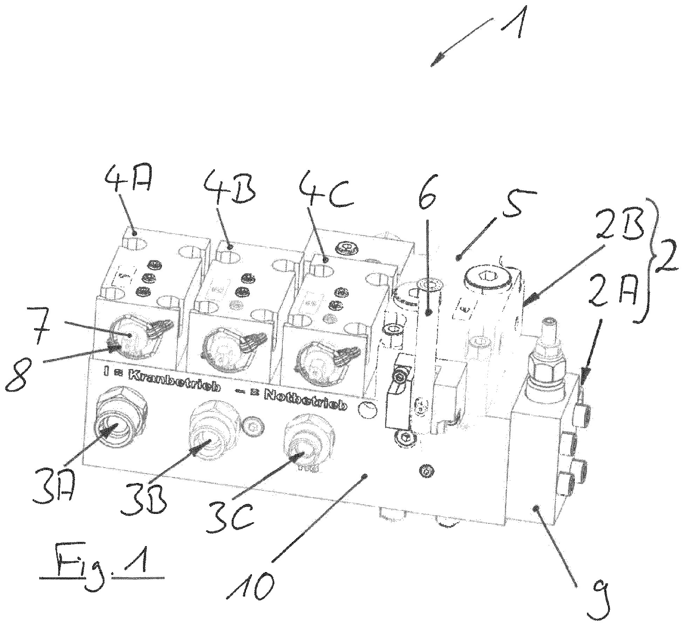

Die Figur 1 zeigt einen erfindungsgemäßen Ventilblock 1 mit einem Grundkörper 10, an welchem drei Sperrventile 4A, 4B, 4C, ein Betätigungsventil 5 und ein Senkbremsventil 9 dergestalt montiert sind, dass deren innere Fluidkanäle mit jenen des Grundkörpers 10 fluidisch in Verbindung stehen. Eine Verrohrung oder Verschlauchung der einzelnen hydraulischen Komponenten ist beim erfindungsgemäßen Ventilblock 1 somit nicht notwendig. Vielmehr findet hier eine "direkte" Übertragung von Hydraulikflüssigkeit zwischen den einzelnen Komponenten statt, welche über dichtende Kontaktflächen miteinander in Verbindung stehen.

Der in Figur 1 zu sehende Ventilblock weist drei identische Sperrventile 4A, 4B, 4C auf, welche je einem Krantriebwerk, beispielsweise einem Drehwerk, einem Wippwerk und einem Hubwerk eines Mobilkrans zugeordnet sind und hierfür mit entsprechenden Triebwerks-Anschlüssen 3A, 3B, 3C hydraulisch in Verbindung stehen. Die Triebwerks-Anschlüsse 3A, 3B, 3C, von welchen in der Figur 1 nur die drei an der Vorderseite des Grundkörpers 10 angeordnet zu sehen sind, sind wiederum mit den einzelnen Krantriebwerken verbunden. Die Sperrventile 4A, 4B, 4C sind hierbei in identischer Weise ausgestaltet und auch in identischer Ausrichtung am Grundkörper 10 angeordnet, so dass eine Betätigung mittels eines nicht gezeigten, lösbar mit den jeweiligen Werkzeugangriffen 7 koppelbaren Handhebel erfolgen kann. Die Stellung eines jeden Ventils 4A, 4B, 4C wird über einen stirnseitig am Werkzeugangriff 7 eingearbeiteten Schlitz 8 angezeigt, für dessen Stellung eine am Grundkörper 10 angebrachte Legende eine Interpretationshilfe liefert: Bei in Einbaulage senkrecht stehendem Schlitz 8 ist die hydraulische Verbindung zum Triebwerks-Anschluss 3A, 3B, 3C gesperrt, was die übliche Stellung für den normalen Kranbetrieb darstellt. Bei waagrecht stehendem Schlitz 8 ist das entsprechende Sperrventil 4A, 4B, 4C geöffnet, so dass ein am entsprechenden Triebwerks-Anschluss 3A, 3B, 3C angeschlossenes Krantriebwerk im Notbetrieb mit Hydraulikflüssigkeit versorgt werden kann. Um eine unkontrollierte Versorgung von Krantriebwerken über die Triebwerks-Anschlüsse 3A, 3B, 3C zu verhindern, können die einzelnen Werkzeugangriffe 7 in einer geschlossen Stellung der Ventile 4A, 4B, 4C mechanisch arretiert werden, etwa durch in der Figur 1 zu sehende Klappstifte.

Der Ventilblock 1 weist ferner ein Betätigungsventil 5 auf, welches einerseits mit jedem der Sperrventile 4A, 4B, 4C und andererseits mit einem Antriebs-Anschluss 2 in Verbindung steht. Je nach Stellung des Handhebels 6 wird eine hydraulische Verbindung zwischen den Sperrventilen 4A, 4B, 4C und dem Antriebs-Anschluss 2 gesperrt oder freigegeben, wobei über das Betätigungsventil 5 ferner eine Zuordnung der Druckseite 2A und der Rücklaufseite 2B des Antriebsanschlusses 2 zu den jeweiligen Seiten der Triebwerks-Anschlüsse 3A, 3B, 3C stattfindet, um so die Bewegungsrichtung der Krantriebwerke vorzugeben.

Um ungewollte, schwerkraftbedingte Stellbewegungen von Krantriebwerken zu verhindern, weist der Ventilblock 1 für entsprechende Triebwerks-Anschlüsse 3A, 3B, 3C ein Senkbremsventil 9 auf.

Wie aus der Figur 1 hervorgeht, sind die Sperrventile 4A, 4B, 4C, das Betätigungsventil 5 wie auch das Senkbremsventil 9 mit dem Grundkörper 10 verschraubt, wobei deren jeweilige Kontaktflächen die sichdurch die jeweiligen Modulkörper erstreckenden Fluidkanäle abdichten. Dieser modulare Aufbau des Ventilblocks 1 ermöglicht nicht nur einen schnellen Austausch einzelner Komponenten, sondern auch die wahlweise Installation unterschiedlicher Komponenten entsprechend der jeweiligen Einbausituation des Ventilblocks 1 in beispielsweise unterschiedlichen Krantypen.

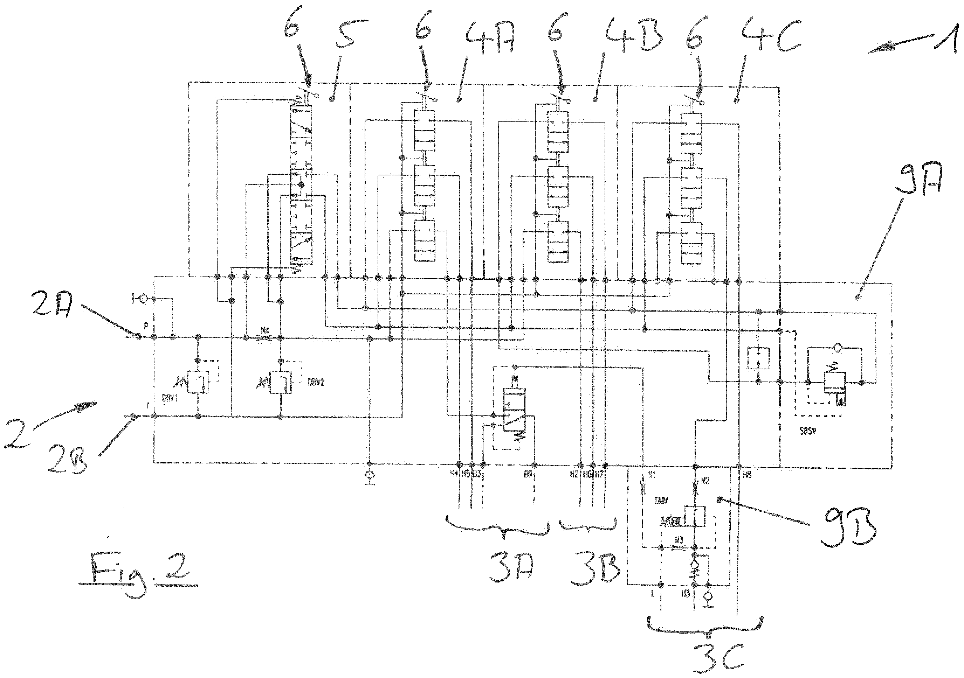

Die Figur 2 zeigt einen hydraulischen Schaltplan für den in der Figur 1 zu sehenden Ventilblock 1. Die Funktion und die Betätigung des Ventilblocks 1 soll im Folgenden unter Bezugnahme auf die Figur 2 erfolgen.

### Grundstellung:

Über die Druckseite 2A des Antriebs-Anschlusses 2 wird von einem Transformator ein Volumenstrom an Hydraulikflüssigkeit bereitgestellt. Bei der in der Figur 2 zu sehenden Grundstellung des Betätigungsventils 5 läuft die Hydraulikflüssigkeit auf der Druckseite 2A um. Das Druckbegrenzungsventil DBV 2 begrenzt hierbei den Speisedruck und öffnet bei ca. 30 bar. In der Grundstellung des Betätigungsventils 5 steht der Speisedruck an sämtlichen Sperrventilen 4A, 4B, 4C an.

### Funktionsbeschreibung Drehwerk:

Durch Öffnen des Sperrventils 4A steht der Speisedruck über das Sperrventil 4A am (nicht bezeichneten) Ventil für den Anschluss der Drehwerksbremse BR an.

Sobald das Betätigungsventil 5 in seine oberste Position verbracht und somit geöffnet wird, steht an sämtlichen Sperrventilen 4A, 4B, 4C Arbeitsdruck an. Durch das geöffnete Sperrventil 4A gelangt Hydraulikflüssigkeit über den Anschluss H5 zu den Drehwerksmotoren und bewirkt ein Drehen des Oberwagens. Die rücklaufende Hydraulikflüssigkeit aus den Motoren gelangt über den Anschluss H4, das Sperrventil 4A, das Betätigungsventil 5, das Druckbegrenzungsventil DBV 2 und die Rücklaufseite 2B des Antriebs-Anschlusses 2 zurück zum Hydrauliktank. Der Arbeitsdruck wird hierbei vom Druckbegrenzungsventil DBV 1 auf 195 bar begrenzt.

### Funktionsbeschreibung Hubwerk:

Durch Öffnen des Sperrventils 4B bei geschlossenem Betätigungsventil 5 gelangt Hydraulikflüssigkeit unter Speisedruck zum Anschluss H2, so dass sich eine damit verbundene Hubwerksbremse öffnet.

Durch Öffnen des Betätigungsventils 5 (oberste Position) gelangt Hydraulikflüssigkeit unter Hochdruck zum Hubwerksmotor, so dass eine Last gehoben werden kann. Die rücklaufende Hydraulikflüssigkeit aus dem Motor fließt über das Sperrventil 4B, das Betätigungsventil 5 und das Druckbegrenzungsventil DBV 2 zurück in den Tank. Der Arbeitsdruck wird hierbei durch das Druckbegrenzungsventil DBV 1 auf 195 bar begrenzt.

Zum Senken der Last wird das Betätigungsventil 5 in seine unterste Stellung verbracht, so dass rücklaufende Hydraulikflüssigkeit aus dem Motor am Senkbremsventil 9A ansteht. Zusätzlich steht über die Druckseite 2A Arbeitsdruck am Senkbremsventil 9A an, das sich durch diese Druckaddition öffnet. Somit kann die lasthebende Hydraulikflüssigkeit über das Betätigungsventil 5 und das Druckbegrenzungsventil DBV 2 in Richtung Tank abfließen. Die Last senkt sich. Die rücklaufende Hydraulikflüssigkeit aus dem Motor gelangt über das Sperrventil 4B, das Betätigungsventil 5 und das Druckbegrenzungsventil DBV 2 zurück in den Tank.

### Funktionsbeschreibung Wippwerk:

Beim Einwippen gelangt durch das geöffnete Betätigungsventil 5 (oberste Stellung) Hydraulikflüssigkeit unter Hochdruck durch das geöffnete Sperrventil 4C bis zum Anschluss H8 und den daran angeschlossenen Wippzylinder. Der Wippzylinder fährt in der Folge aus und der Ausleger hebt sich. Die rücklaufende Hydraulikflüssigkeit aus dem Zylinder fließt über einen nicht dargestellten Kransteuerblock zurück in den Tank.

Zum Auswippen wird das Betätigungsventil 5 in seine unterste Stellung gebracht, so dass Hydraulikflüssigkeit über die Blende N2 bis zum Druckminderventil 9B gelangt. Der Wippzylinder fährt langsam ein und der Ausleger senkt sich. Die rücklaufende Hydraulikflüssigkeit aus dem Zylinder fließt über einen hier nicht dargestellten Kransteuerblock zurück in den Tank.

## Patentansprüche

1. Notbetriebs-Ventilblock (1) mit
- einem Antriebs-Anschluss (2) zur hydraulischen Verbindung des Ventilblocks (1) mit einer Notantriebseinrichtung eines Mobilkrans;
- zumindest zwei Triebwerks-Anschlüssen (3A, 3B, 3C) zur hydraulischen Verbindung des Ventilblocks (1) mit je einem Triebwerk des Mobilkrans;
- zumindest zwei Sperrventilen (4A, 4B, 4C), welche jeweils einem der Triebwerks-Anschlüsse (3A, 3B, 3C) zugeordnet und dazu ausgestaltet sind, eine hydraulische Verbindung zwischen dem Antriebs-Anschluss (2) und dem ihnen jeweils zugeordneten Triebwerks-Anschluss (3A, 3B, 3C) wahlweise freizugeben oder zu sperren, und
- einem Betätigungsventil (5), welches dazu ausgestaltet ist, die hydraulische Verbindung zwischen einer Druckseite (2A) und einer Rücklaufseite (2B) des Antriebs-Anschlusses (2) mit entsprechenden Seiten der Triebwerks-Anschlüsse (3A, 3B, 3C) wahlweise umzukehren.

2. Notbetriebs-Ventilblock nach Anspruch 1, wobei für zumindest zwei der folgenden Triebwerke je ein Triebwerks-Anschluss (3A, 3B, 3C) vorgesehen ist:
- Drehwerk zum Drehen des Kran-Oberwagens gegenüber dem Kran-Unterwagen;
- Wippwerk zum Einwippen und Auswippen des Kranauslegers;
- Hubwerk zum Heben und Senken der an einem Hubseil angehängten Last.

3. Notbetriebs-Ventilblock nach einem der Ansprüche 1 und 2, wobei die Sperrventile (4A, 4B, 4C) und/oder das Betätigungsventil (5) ausgestaltet sind, mittels eines Handhebels (6) betätigt zu werden, insbesondere wobei die Betätigung der Sperrventile (4A, 4B, 4C) so ausgestaltet ist, dass eine gleichzeitige Öffnung von mehreren Sperrventilen (4A, 4B, 4C) verhindert wird.

4. Notbetriebs-Ventilblock nach Anspruch 3, mit ferner einem für die Sperrventile (4A, 4B, 4C) gemeinsam bereitgestellten Handhebel, wobei jedes der Sperrventile (4A, 4B, 4C) einen Werkzeugangriff (7) aufweist, mit welchem der Handhebel lösbar gekoppelt werden kann.

5. Notbetriebs-Ventilblock nach einem der Ansprüche 3 und 4, wobei der Handhebel oder die Werkzeugangriffe (7) der Sperrventile (4A, 4B, 4C) in identischer Weise am Ventilblock (1) angeordnet und/oder ausgerichtet sind, insbesondere in aneinander angrenzender Weise.

6. Notbetriebs-Ventilblock nach einem der Ansprüche 3 bis 5, wobei der Handhebel oder die Werkzeugangriffe (7) der Sperrventile (4A, 4B, 4C) in ihrer Stellung mechanisch festlegbar ist/sind, insbesondere in ihrer die hydraulische Verbindung zwischen dem Antriebs-Anschluss (2) und dem ihnen jeweils zugeordneten Triebwerks-Anschluss (3A, 3B, 3C) sperrenden Position.

7. Notbetriebs-Ventilblock nach einem der Ansprüche 1 bis 6, wobei die Sperrventile (4A, 4B, 4C), insbesondere deren Werkzeugangriffe (7) oder deren Handhebel eine Stellungsanzeige (8) aufweisen, im Speziellen in Form einer Vertiefung oder eines Vorsprungs am Werkzeugangriff (7) oder Handhebel.

8. Notbetriebs-Ventilblock nach einem der Ansprüche 1 bis 7, wobei zumindest eines, insbesondere alle Sperrventile (4A, 4B, 4C) als Drehschieberventil und/oder als 6/2-Wegeventile ausgebildet sind.

9. Notbetriebs-Ventilblock nach einem der Ansprüche 1 bis 8, wobei das Betätigungsventil (5) als Drehschieberventil und/oder als 5/3-Wegeventil ausgebildet ist.

10. Notbetriebs-Ventilblock nach einem der Ansprüche 1 bis 9, wobei das Betätigungsventil (5) in der hydraulischen Verbindung des Antriebs-Anschlusses (2) mit den Triebwerks-Anschlüssen (3A, 3B, 3C) zwischen dem Antriebs-Anschluss (3A, 3B, 3C) und den Sperrventilen (4A, 4B, 4C) angeordnet ist.

11. Notbetriebs-Ventilblock nach einem der Ansprüche 1 bis 10, wobei das Betätigungsventil (5) ferner dazu ausgestaltet ist,
- in einer Grundstellung zumindest eines der Sperrventile (4A, 4B, 4C) mit einem Speisedruck zu versorgen, und insbesondere einen Umlauf von Hydraulikflüssigkeit von der Druckseite (2A) zur Rücklaufseite (2B) des Antriebs-Anschlusses (2) zu ermöglichen; und/oder
- in einer Öffnungsstellung die Sperrventile (4A, 4B, 4C) mit einem Arbeitsdruck zu versorgen; und/oder
- in einer insbesondere zwischen der Grundstellung und einer der Öffnungsstellungen befindlichen Zwischenstellung zumindest eines der Sperrventile (4A, 4B, 4C) mit einem Speisedruck zu versorgen, und insbesondere einen Umlauf der Hydraulikflüssigkeit von der Druckseite (2A) zur Rücklaufseite (2B) des Antriebs-Anschlusses (2) zu verhindern.

12. Notbetriebs-Ventilblock nach Anspruch 11, wobei zumindest eines der Sperrventile (4A, 4B, 4C) in einer Grundstellung des Betätigungsventils (5) nicht mit einem Speisedruck versorgt wird.

13. Notbetriebs-Ventilblock nach einem der Ansprüche 1 bis 12, mit ferner zumindest einem der Triebwerks-Anschlüsse (3A, 3B, 3C) zugeordneten Senkbremsventil (9), welches dazu ausgestaltet ist, eine hydraulische Verbindung zwischen den Rücklaufseiten (2B) des Triebwerks-Anschlusses (3A, 3B, 3C) und des Antriebs-Anschlusses (2) wahlweise freizugeben oder zu sperren, und insbesondere über das Betätigungsventil (5) mit Arbeitsdruck versorgt wird.

14. Notbetriebs-Ventilblock nach einem der Ansprüche 1 bis 13, mit ferner einer hydraulischen Verbindung zur Rückführung von aus zumindest einem der Sperrventile (4A, 4B, 4C) und/oder aus dem Betätigungsventil (5) als Leckage austretender Hydraulikflüssigkeit zum Antriebs-Anschluss (2).

15. Mobilkran mit einer Notantriebseinrichtung, zumindest zwei, insbesondere dem Oberwagen zugeordneten Triebwerken, und einem Notbetriebs-Ventilblock (1) nach einem der Ansprüche 1 bis 14.
